# EUROPEAN PATENT APPLICATION

(11) **EP 2 208 611 A1**
(43) Date of publication of application: **21.07.2010**
(21) Application number: 09150796.2
(22) Date of filing: 16.01.2009
(51) Int. Cl.: B29C 73/22, C09D 7/12, C08K 9/10

(54) **Self healing composition**

(71) Applicant: Stichting Dutch Polymer Institute, 5612 AB Eindhoven (NL)
(72) Inventor: Van Den Dungen, Eric T.A., 7602, Stellenbosch (ZA); Klumperman, Lubertus, 2351 EA, Leiderdorp (NL)
(74) Representative: Renkema, Jaap

(57) **Abstract**

Healing composition comprising a plurality of first microcapsules having a shell and a core, the core comprising a first flowable compound having first functional groups and a plurality of second microcapsules having a shell and a core, the core comprising a second flowable compound having second functional groups, wherein the first functional groups can react with the second functional groups in the absence of a catalyst or activator, wherein the first functional groups are thiol (-SH) groups and the second functional groups are -ene (C=C) groups, self healing polymer composition comprising a polymer media and the healing composition and. shaped article comprising the self healing composition.

## Description

The invention relates to a healing composition comprising a plurality of first microcapsules having a shell and a core, the core comprising a first flowable compound having first functional groups and a plurality of second microcapsules having a shell and a core, the core comprising a second flowable compound having second functional groups, wherein the first functional groups can react with the second functional groups in the absence of a catalyst or activator.

In Macromolecules 2008, 41, 5197 - 5202 a composition is described wherein the first microcapsules comprise an epoxy and the second microcapsules comprise a mercaptan hardener and a tertiary amine as a catalyst. A disadvantage of this composition resides in the fact that incorporation of the catalyst requires a separate step making the preparation of the second microcapsules complicated.

Aim of the invention is a healing composition being easier to prepare and requiring no catalyst or activator.

This aim is achieved according to the invention in that that the first functional groups are thiol (-SH) groups and the second functional groups are -ene (C=C) groups.

When these flowable compounds are contacted, e.g. when the shells of the microcapsules in the composition are ruptured and the flowable compounds flow into a propagating crack, a fast reaction occurs forming a cross-linked network healing the crack, even in the absence of any catalyst or activator. Time needed to repair an occurring crack will depend on the depth and the width of the crack, the governing temperature and reactivity of the applied thiol - -ene combination and may range from several, e.g. 2 to 4, minutes to several hours.

Although not necessary, the presence of an initiating or activating compound for the thiol- -ene reaction may accelerate the healing process.

As further advantage the composition also functions in an oxygen and water rich environment, in particular normal environmental conditions.

The first flowable compound within the scope of the present invention may be any compound having at least two -SH groups, capable of proton abstraction to react with a carbon-carbon double bond. Preferably the thiol groups have a high rate of chain transfer resulting in fast regeneration of thiyl radicals.

Preferably the compounds have a -SH functionality higher than 2. This will result in more densely cross-linked networks. Particularly suitable thiol functional compounds are alkyl thiols, alkylthioglycolate and alkyl-3-mercaptopropionates.

Suitable examples of aliphatic and cycloaliphaticdithiols include 1,2-ethanedithiol, butanedithiol, 1,3-propanedithiol,1,5-pentanedithiol, 2,3-dimercapto-l-propanol,dithioerythritol, 3,6-dioxa-1,8-octanedithiol, 1,8 octanedithiolhexanedithiol, dithiodiglycol, pentanedithiol,decanedithiol, 2-methyl 1,4 butanedithiol, bis-mercaptoethylphenylmethane, I,9-nonanedithiol(I,9-dimercaptononane),glycoldimercaptoacetate,3-mercaptofi,4-dimethyl-cyclohexaneethanethiol, cyclohexane dimethanedithiol, and 3,7-dithia-1,9-nonanedithiol.

Suitable examples of aromatic dithiols include 1,2-benzenedithiol, 1,3-benzenedithiol, 1,4-benzenedithiol, 2,4,6-trimethyl-1,3-benzenedimethanethiol, durene-al,a2-dithiol, 3,4-dimercaptotoluene, 4-mefhyl-l,2-benzenedithiol, 2,5-dimercapto-1,3,4-thiadiazole, 4,4'-thiobisbezenedithiol, bis(4-mercaptophenyl)-2,2'-propane(bisphenol dithiol) (made according to the methodof Meng Y. Z, Hay. A. S, J. of App. Polym. Sci, V74,3069-307, 1999), [I,I'-biphenyl]-4,4'-dithiol, and p-xylenea,a-dithiol.

Examples of suitable trithiol functional compounds include, trimethylolethane tris-mercaptopropionate, trimethylolpropane tris-mercaptopropionate (TMPTSH), trimethylolethane tris-mercaptoacetate, and trimethylolpropane tris-mercaptoaacetate glycerol tri(II-mercaptoundecate), trimethylol propane tri(II-mercaptoundecate). A preferred trithiol is trimethylolpropane tris(2-mercaptopropionate) TMPTSH.

Examples of suitable tetrafunctional thiols include pentaerythritol tetramercapto propionate, pentaerythritol tetramercapto acetate, and pentathritoltetra(II-mercaptoundecate)

Examples of multifunctional thiols having functionality greater than 4, include polythiols as described on p. 7 of WO 88/02902.

The second flowable compound within the scope of the present invention is any compound with at least two -ene groups, so at least two reactive carbon-carbon double bonds (C=C) that are capable of undergoing propagation reactions with a thiyl radical and subsequent chain-transfer with a thiol compound to regenerate a thiyl radical. Higher -ene functionality will result in more densely cross-linked networks.

As -ene functional compounds those with an electron rich carbon-carbon double bond are favoured due to their higher reactivity in thiol-ene chemistry (e.g. vinyl ethers, allylics, acrylates). Also norbornenes are very useful in the present invention. Norbornenes have extremely high reactivity which arises from loss of ring-strain upon reaction with a thiyl radical. The resulting radical is unstable and undergoes fast chain-transfer with thiol to regenerate the thiyl radical.

The compounds having functional groups of the present inventions are flowable. Flowable in this respect is to be understood as having a viscosity permitting it to flow out of the ruptured microcapsules under the expected use conditions of products containing the healing compositions into cracks occurring in the product. If necessary, to improve the flow properties of the core material, a liquid diluent for the flowable compound may be added during the microcapsule production. Preferably the diluent is inert to the other components of the healing composition and the product.

Polymeric material products tend to fail or degrade due to mechanical fatigue, mechanical impact, thermal fatigue and other known degradation mechanisms. They may tend to become brittle causing cracks. Also mechanical stresses and forces may cause cracking. These effects may cause product failure and shorten product life time.

Healing compositions of the present invention when mixed into polymeric media of various kinds will fill cracks, fractures and other damages occurring in the media with the polymer resulting from the reaction of the two flowable compounds, thus maintaining the integrity and mechanical properties of the media fully or to a large extent. This prolongs the life time of the media and the object it is part of.

The invention thus further relates to a self healing polymer composition comprising a polymer media and the healing composition of the present invention.

The present healing compositions will be effective in any polymer media, as long as the implementation of the capsules does not result in deterioration of the properties of the resulting coating or article and the microcapsules have good compatibility with the polymer media allowing homogeneous dispersion in that media. The polymeric media material that can be made self healing by the healing composition of the present invention is not particularly limited and includes thermoplastic polymers, thermosetting resins and elastomers.

For coating purposes polymer media that can be applied as water borne coatings, e.g. acrylates, alkyds and styrene-acrylics are highly suitable.

The polymer media forms the continuous phase in the self healing composition, in which the microcapsules are uniformly dispersed. The amounts of the first and second flowable compounds will preferably be chosen such that the molar ratio of thiol functional groups and -ene functional groups is between 0.8 and 1.2, preferably between 0.9 and 1.1, more preferably is between 0.95 and 1.05 and most preferably is equal to 1.

The invention further relates to shaped articles comprising the self healing composition of the present invention. Shaped articles comprise articles consisting partially or totally of the self healing composition according to the invention. As non limiting examples, the self healing composition can be advantageously applied as a self healing protective surface coating for e.g. metal objects. It can also be used to manufacture objects, essentially consisting of the self healing composition and having self healing properties. The self healing composition articles may be formed by common techniques, examples of those being lamination, injection molding, extrusion, extrusion covering, film blowing, calendaring, sheet thermoforming, coating on a substrate, casting, compression molding.

Microcapsules are small bodies having solid walls as a shell fabricated to enclose the flowable compounds as the core of the bodies. The microcapsules for smooth distribution within the polymer media advantageously may be spherical but also may have an aspect ratio, for example ranging from 1:1 to 1:10. Also irregular shapes are suitable.

Shell core microcapsules are known in the art and their size ranges from about 10 nanometres to 1000, and more practically 250 micrometers. Preparation of microcapsules suitable for the present invention are known in the art.

For preparing microcapsules in the range from 10 micrometers and larger, dispersion polymerisation of the shell material, e.g. a urea-formaldehyde polymer, in an organic medium-in-water emulsion wherein the flowable core compound is finely dispersed in the organic phase, such as oil, is a suitable technique. In order to prevent agglomeration of the microcapsules antiflocculant compounds may be added.

For preparation of shell core microcapsules in the size range of 10 nanometers to 10 micrometers (also known as nanocapsules), miniemulsion polymerization is a suitable technique known in the art. Microcapsules produced via miniemulsion polymerization, are obtained in the form of a stable latex which has the advantages of homogeneous dispersion in the composite coating. Mixing of these capsules with the polymer media thus is facilitated considerably. Surfactants and other stabilizers may be added to for enhancing the forming of a stable latex. Preferably the size ranges between 50 and 500 nanometer.

The thickness of the shell will be functionally sufficient to preclude premature rupture of the microcapsules under normally encountered tensile or compressive forces not causing cracking of the self healing composition. On the other hand it should allow rupture of the shell when it is in the path of a propagating crack or fracture. Depending on the material of the shell and the microcapsule size typical values for the shell thickness may range from 25 to 200 nm, preferably from 30 to 100 nm.

Suitable materials for preparation of the shell of the microcapsules are precursors of polymers that will form a shell which is impermeable to the core material and sufficiently brittle to be ruptured when the microcapsule lies in the path of a propagating crack. Precursors of polyurethanes, poylurea, poly (methyl methacrylate), polyamide and amino-aldehyde resins, in particular urea-formaldehyde resins may be advantageously applied. Resorcinol can be applied as an additional brancher

The invention will be elucidated by the following examples without being restricted thereto.

### General

As typical flowable compunds, TetraThiol as the thiol functional compound and DiNorbornene and DiAcrylate as -ene functional compounds as shown below were applied.

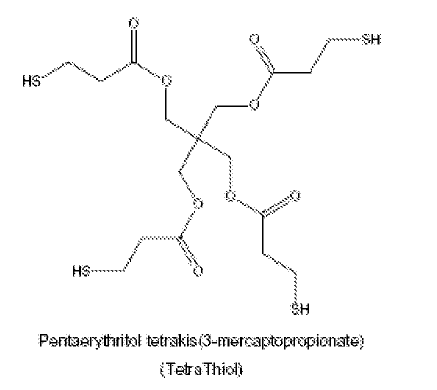

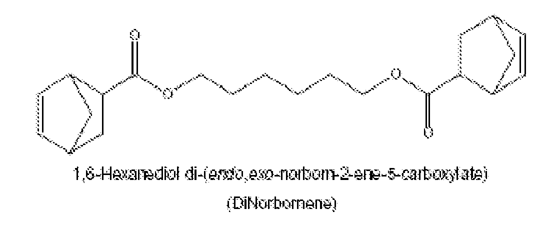

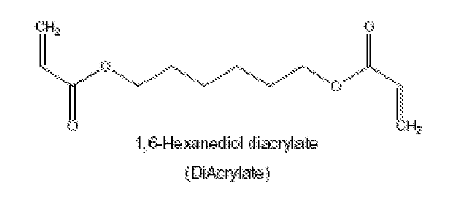

### Example1: Preparation of urea-formaldehyde microcapsules containing TetraThiol

To a 50 mL three-neck round-bottom flask was charged 2.0 g of urea (0.033 mol) and 5.2 g of a 37% solution of formaldehyde (0.064 mol of formaldehyde) so that the ratio of formaldehyde to urea was kept above 1.8. After homogenization, the pH of the mixture was raised to ∼9 via the addition of a few drops of a 5 wt% solution of NaOH. The flask was immersed in an oil bath preheated to 70 °C and left to react for one hour. This resulted in the formation of UF-prepolymer.

Separately, 6.59 g of a solution of SMA1000 (Elf Atochem (Sartomer) >98%, styrene to maleic anhydride ratio 1:1, molecular weight Mₙ = 2.6 10³ g/mol, PDI = 1.68), in distilled water (0.80 g of SMA1000), 0.20 g of resorcinol and 0.20 g of NaCl were dissolved in distilled water (the total mass of distilled water was 100 g) and the pH was decreased to ∼3. Then 20.0 g of TetraThiol (pentaerythritol tetrakis(3-mercaptopropionate) was added to the aqueous phase and an oil-in-water emulsion was formed by stirring for about half an hour at a stirring speed of 500 rpm.

The UF-prepolymer was added to the oil-in-water emulsion and the pH of the mixture was corrected to pH ∼3.0 via the addition of a few drops of a 5 wt% solution of hydrochloric acid. The *in-situ* polymerization of urea and formaldehyde was allowed to continue for two hours at 55 °C while the pH was carefully monitored and kept at ∼2.5-3.0. After two hours the dispersion was cooled down and the pH was raised to 7. The capsules were washed three times with distilled water and rinsed twice with chloroform to remove excess TetraThiol that was not encapsulated. The microcapsules were collected and dried in a vacuum oven overnight at 50 °C.

### Example 2: Preparation of urea-formaldehyde microcapsules containing DiNorbornene or DiAcrylate

The preparation of UF-microcapsules with DiNorbornene (1,6-hexanediol di(endo, *exo*-norborn-2-ene-5-carboxylate) or Diacrylate (1,6-hexanediol diacrylate) as core compound was carried in the same way as the preparation of the UF-microcapsules with TetraThiol described in Example 1, the TetraThiol having been replaced by the DiNorbornene or DiAcrylate respectively.

### Example 3 Implementation of microcapsules into paint formulation

Equal amounts of microcapsules containing TetraThiol and microcapsules containing DiNorbornene or DiAcrylate as prepared in Examples 1 and 2 were mixed in a poly(methyl acrylate) (PMA) latex with 30% solid content and with a particle size of 125 nm, a particle size distribution of 0.025, a molecular weight of 5.1x10⁵ g/mol and molecular weight distribution of 2.24, the amounts ranging from 5 - 10 wt% relative to the solid content of the latex and homogeneously distributed via stirring. In addition, ∼0.5 wt% of photoinitiator (2,2-dimethoxy-2-phenylacetophenone) relative to TetraThiol was dispersed in the composition.

The thus obtained self healing composition was then air-dried in an aluminum pan and the self-healing ability was investigated via scanning electron microscopy (SEM) upon crack formation induced with a razor blade.

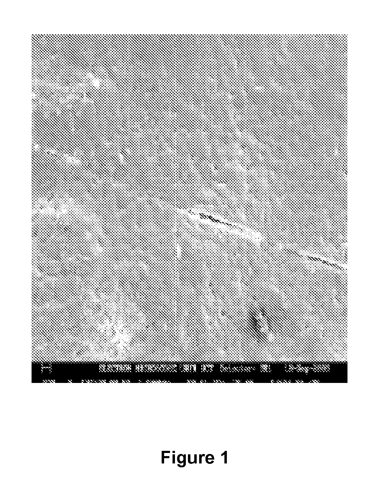

Figure 1 shows a SEM picture of a partially repaired cut in a composite PMA coating film containing 5 wt% relative to the solid content of the PMA latex of both TetraThiol and DiAcrylate microcapsules. The not-complete repair of the cut is to be attributed to a non-homogeneous dispersion of the DiAcrylate microcapsules due to aggregation.

## Claims

1. Healing composition comprising a plurality of first microcapsules having a shell and a core, the core comprising a first flowable compound having first functional groups and a plurality of second microcapsules having a shell and a core, the core comprising a second flowable compound having second functional groups, wherein the first functional groups can react with the second functional groups in the absence of a catalyst or activator, **characterized in that** the first functional groups are thiol (-SH) groups and the second functional groups are -ene (C=C) groups.

2. Healing composition according to claim 1, wherein the compound having thiol groups has been chosen from the group consisting of alkyl thiols, alkylthioglycolate and alkyl-3-mercaptopropionates.

3. Healing composition according to claim 1 or 2, wherein the compound having -ene groups is chosen from the group consisting of vinyl ethers, allylics, acrylates and norbornenes.

4. Healing composition according to any of claims 1- 3 wherein the average outer diameter of the microcapsules is between 10 and 250 micrometers.

5. Healing composition according to any of claims 1- 3, wherein the average outer diameter of the microcapsules is between 50 nanometres and 500 nanometres.

6. Self healing polymer composition comprising a polymer media and a healing composition according to any of claim 1 - 5.

7. Shaped article comprising the self healing polymer composition of claim 5 or 6.
